# EUROPÄISCHE PATENTSCHRIFT

(11) **EP 0 699 794 B1**
(45) Veröffentlichungstag und Bekanntmachung des Hinweises auf die Patenterteilung: **09.12.1998**
(21) Anmeldenummer: 95113862.7
(22) Anmeldetag: 04.09.1995
(51) Int. Cl.: D05B 73/00, B25J 9/00

(54) **Nähvorrichtung**
Sewing apparatus
Dispositif de couture

(30) Priorität: 02.09.1994 DE 4431318
(43) Veröffentlichungstag der Anmeldung: 06.03.1996
(73) Patentinhaber: KSL Keilmann Sondermaschinenbau GmbH, 64653 Lorsch (DE)
(72) Erfinder: Keilmann, Robert Horst, D-64653 Lorsch (DE)
(74) Vertreter: Schaumburg, Thoenes, Thurn Patentanwälte

(56) Entgegenhaltungen:
- EP-A- 0 107 910
- EP-A- 0 220 501
- EP-A- 0 338 117
- WO-A-92/13986
- FR-A- 2 645 007
- GB-A- 2 244 291
- US-A- 4 557 206

## Beschreibung

Die Erfindung betrifft eine Nähvorrichtung mit einem Nadelsystem und einem mit diesem zusammenwirkenden Greifersystem, die gemeinsam relativ zum Nähgut in Richtung mindestens zweier Raumachsen verstellbar sind.

Es sind Vorrichtungen bekannt, in denen das mechanisch mit dem Greifersystem gekoppelte Nadelsystem entlang zweier Raumachsen, d.h. in der Ebene, in der das Nähgut liegt, verstellbar ist. Solche Nähvorrichtungen arbeiten befriedigend für ebene Werkstücke.

Es gibt jedoch zahlreiche mit Nähten versehene Produkte, in denen der Nahtverlauf an dem fertigen Produkt eine Kurve im Raum bildet. Ferner tritt bei solchen Produkten, die aus mehreren und/oder dickeren miteinander vernähten Materiallagen bestehen, das Problem auf, daß die Lagen zwar unter Umständen im ebenen Zustand miteinander vernäht werden können, bei der Krümmung der so hergestellten mehrlagigen Schicht aber an der Krümmungsinnenseite Falten auftreten, während auf der Krümmungsaußenseite das Material, und insbesondere auch die Naht durch die auftretende Spannung stark belastet wird. Daher besteht bei solchen Produkten oder Wunsch, die Lagen bereits in dem der Form des fertigen Produktes entsprechenden Zustand miteinander zu vernähen.

Aus der europäischen Offenlegungsschrift 0 107 910 ist bereits eine Nähmaschine bekannt, deren Nadelsystem und Greifersystem an einem im wesentlichen vertikalen Träger derart gelagert sind, daß sie in Richtung der Nadelachse relativ zueinander verstellbar sind und um die Nadelachse in vier um 90° voneinander entfernte Positionen gedreht werden können. Der Träger selbst ist in Richtung einer horizontalen Raumachse translatorisch verstellbar und um diese Achse um einen beschränkten Winkel von 15° schwenkbar. Das Werkstück ist in einer Halterung eingespannt, mittels der es translatorisch entlang der zweiten horizontalen Raumachse verstellbar ist und um diese gedreht werden kann. Damit können an einem zylindrisch gekrümmten Werkstück Nähte parallel zur Zylinderachse und in Umfangsrichtung des Werkstückes genäht werden. Diese Vorrichtung eignet sich aufgrund der mechanischen Beschränkungen nicht dazu, entlang beliebiger dreidimensionaler Raumkurven zu nähen. Auch ist es mit einer solchen Anordnung nicht möglich, Nähte an Hohlkörpern anzufertigen.

Die US-A-3,515,080 beschreibt eine Nähvorrichtung, bei der das Nadelsystem und das Greifersystem entlang aller drei Raumachsen translatorisch verstellt und um diese Raumachsen gedreht werden können, wobei das Nadelsystem und das Greifersystem mechanisch unabhängig voneinander angetrieben werden können und lediglich über eine elektronische Schaltung miteinander gekoppelt sind. Das in dieser Schrift dargestellte Ausführungsbeispiel zeigt eine Nähvorrichtung, bei der das Nadelsystem und das Greifersystem entlang zweier horizontaler Raumachsen verstellbar und um die dritte Raumachse drehbar sind. Damit sind nur Nähte in einer horizontalen Ebene möglich. Wie das Nadelsystem und das Greifersystem angeordnet werden können, damit sie entlang aller drei Raumachsen translatorisch verstellbar und um diese Raumachsen drehbar sind, so daß eine Naht entlang einer dreidimensional gekrümmten Kurve angefertigt werden könnte, ist dieser Schrift nicht zu entnehmen.

Der Erfindung liegt die Aufgabe zugrunde, eine Nähvorrichtung der eingangs genannten Art anzugeben, mit der Nähte entlang einer beliebigen Raumkurve erzeugt werden können.

Diese Aufgabe wird erfindungsgemäß dadurch gelöst, daß das Nadelsystem mit dem Nadelantrieb an einem ersten Träger angeordnet und mittels einer ersten Positioniereinrichtung im Raum positionierbar ist, daß das Greifersystem mit dem Greiferantrieb an einem zweiten Träger angeordnet und mittels einer zweiten Positioniereinrichtung im Raum positionierbar ist, daß eine erste elektronische Steuereinrichtung zum Synchronisieren des Nadelantriebes und des Greiferantriebes vorgesehen ist und daß eine zweite elektronische Steuervorrichtung vorgesehen ist, welche die Positioniervorrichtungen in der Weise synchronisiert, daß das Nadelsystem und das Greifersystem während des Nähvorganges eine vorgegebene räumliche Beziehung relativ zueinander einhalten.

Der wesentliche Gedanke der vorliegenden Erfindung besteht also darin, das Nadelsystem und das Greifersystem, d.h. die dem herkömmlichen Nähmaschinenoberteil und Nähmaschinenunterteil entsprechenden Teile der Nähvorrichtung mechanisch vollständig voneinander zu trennen und über die elektronische Steuereinrichtungen wieder miteinander zu koppeln. Dadurch ist es möglich, die durch die Bauart der bisher bekannten Nähvorrichtungen bedingten mechanischen Beschränkungen zu eliminieren und ein räumliches Nähen zu ermöglichen. Die erfindungsgemäße Vorrichtung ermöglicht damit insbesondere das Vernähen von Materialschichten, die bereits in der Gestalt des fertigen Werkstückes gekrümmt übereinander liegen. Solche Werkstücke sind beispielsweise schußsichere Westen, Teile von Flugzeugen, Sitzbezüge und dergleichen.

Für eine vollkommen uneingeschränkte Bewegung von Nadel- und Greifersystem ist es vorteilhaft, wenn die beiden Positioniervorrichtungen als interpolierbare Mehrachsen-CNC-Positioniereinheiten mit Positionierantrieben für eine translatorische Bewegung des Nadel- und des Greifersystems in und eine Drehung des Nadel- und des Greifersystems um die drei Raumachsen ausgebildet sind. Derartige Positioniereinheiten sind für sich an sich bekannt.

Grundsätzlich ist es zwar denkbar, die Positioniervorrichtungen unabhängig voneinander zu steuern. Die erforderliche Genauigkeit läßt sich jedoch einfacher dadurch erreichen, daß die zweite Steuervorrichtung jeweils eine einer Positioniervorrichtung zugeordneter Rechnereinheit umfaßt, wobei die Rechnereinheiten in einem Master-Slave-Verhältnis stehen. Die Positioniervorrichtung des einen Systems, beispielsweise des Greifersystems wird also immer der Positioniervorrichtung des anderen Systems, beispielsweise des Nadelsystems nachgeführt.

Die beiden Träger können mechanisch völlig unabhängig voneinander sein. Es besteht jedoch auch die Möglichkeit, die beiden Träger an derselben Basis beweglich zu lagern, die relativ zu einer Nähguthalterung verfahrbar ist.

Wie dies bei CNC-Positioniereinheiten üblich ist, kann der Nahtverlauf vorgegeben werden. Es besteht aber auch die Möglichkeit, daß die Steuereinrichtung Mittel zum Erfassen und Speichern einer von dem Nadelsystem und dem Greifersystem bei einem Nähvorgang gemeinsam durchlaufenen Nähkurve umfaßt, so daß ein bestimmter Nahtverlauf im sogenannten Teach-In-Verfahren erfaßt und abgespeichert wird.

Die Erfindung betrifft weiterhin ein Verfahren zum Nähen entlang einer dreidimensionalen Kurve, mit einem Nadelsystem und einem mit diesem zusammenwirkenden Greifersystem, die gemeinsam relativ zum Nähgut in Richtung mindestens zweier Raumachsen verstellbar sind, wobei die folgenden Schritte ausgeführt werden: Positionieren des Nadelsystems und des Greifersystems an einer Startposition auf der Kurve, elektrisches Koordinieren der Bewegungen des Nadelsystems und des Greifersystems entlang der Kurve, wobei das Nähen während der Bewegung entlang der Kurve erfolgt, und elektronisches Synchronisieren des Nadelsystems und des Greifersystems während des Nähvorganges.

Durch das erfindungsgemäße Nähverfahren werden die oben bereits beschriebenen vorteilhaften Wirkungen der erfindungsgemäßen Nähvorrichtung beim Nähen wirksam.

Weitere Merkmale und Vorteile der Erfindung ergeben sich aus der folgenden Beschreibung, welche in Verbindung mit den beigefügten Zeichnungen die Erfindung anhand von Ausführungsbeispielen erläutert. Es zeigen:
- Figur 1: zwei beiderseits eines Gestells zur Aufnahme eines Werkstückes angeordnete einarmige Roboter, von denen der eine das Nadelsystem und der andere das Greifersystem trägt,
- Figur 2: eine schematische Darstellung eines zweiarmigen Roboters, dessen einer Arm das Nadelsystem und dessen anderer Arm das Greifersystem trägt,
- Figur 3: eine schematische Darstellung zweier zweiarmiger Roboter entsprechend Figur 2 beiderseits einer Werkstückauflage,
- Figur 4: eine schematische Darstellung der Steuerungen der erfindungsgemäßen Nähvorrichtung, und
- Figur 5: ein Flußdiagramm für das Verfahren zum dreidimensionalen Nähen.

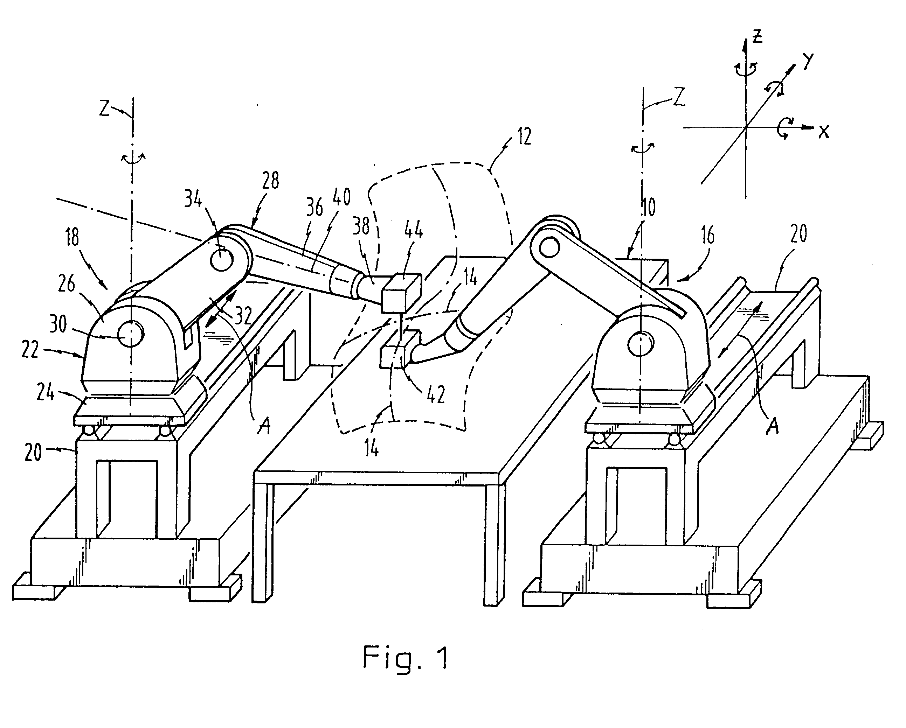

In der Figur 1 erkennt man ein allgemein mit 10 bezeichnetes Gestell zur Aufnahme und Halterung eines Werkstückes 12, das aus mehreren räumlich gekrümmten Materiallagen besteht, die entlang räumlich gekrümmter Nähte 14 miteinander vernäht werden sollen.

Beiderseits des Gestelles 10 ist jeweils ein Roboter 16, 18 auf einer Schiene 20 in Richtung des Doppelpfeiles A verfahrbar gelagert. Die Roboter 16, 18 sind im wesentlichen identisch ausgebildet. Sie umfassen eine Basis 22 mit einem Sokkel 24 und einem Oberteil 26, das auf dem Sockel 24 um die Hochachse Z drehbar gelagert ist. Das Oberteil 26 trägt jeweils einen Gelenkarm 28 mit einem ersten an dem Oberteil 26 um eine Achse 30 gelagerten Abschnitt 32 und einem an diesem um eine Achse 34 schwenkbar gelagerten zweiten Abschnitt 36. An dem freien Ende des zweiten Abschnittes 36 ist ein Halter 38 um die Längsachse 40 des zweiten Abschnittes 36 drehbar gelagert. Die Positionierantriebe der vorstehend beschriebenen relativ zueinander beweglichen Teile sind nicht dargestellt, da der soweit beschriebene Roboter 16 bzw. 18 an sich bekannt ist.

Der Halter 38 des Roboters 16 trägt ein Greifersystem 42 zusammen mit dem Greiferantrieb, während der Halter 38 des Roboters 18 ein Nadelsystem 44 mit dem Nadelantrieb trägt. Das Greifersystem 42 und das Nadelsystem 44 werden von der Firma KSL GmbH, Deutschland gebaut. Als Greifersystem 42 und als Nadelsystem 44 können z.B. die Stichtypen Doppelsteppstich, Stichtyp 301 oder Doppel-Ketten-Stich, Stichtyp 401 verwendet werden. Das Greifersystem 42 und das Nadelsystem 44 können zusammen wie eine herkömmliche Nähmaschine zusammenwirken, sind jedoch mechanisch vollständig voneinander getrennt und nur elektronisch über eine Vielachsen-Master-Slave-Steuerung gekoppelt. Eine derartige Vielachsen-Master-Slave-Steuerung wird ebenfalls von der KSL GmbH, Deutschland, unter dem Namen KSL-Compact KL 120 hergestellt. Das Greifersystem 42 und das Nadelsystem 44 können mittels der Roboter 16, 18 parallel zu den Raumachsen x, y, z translatorisch bewegt und um diese Achsen gedreht werden, wie dies in Figur 1 angedeutet ist.

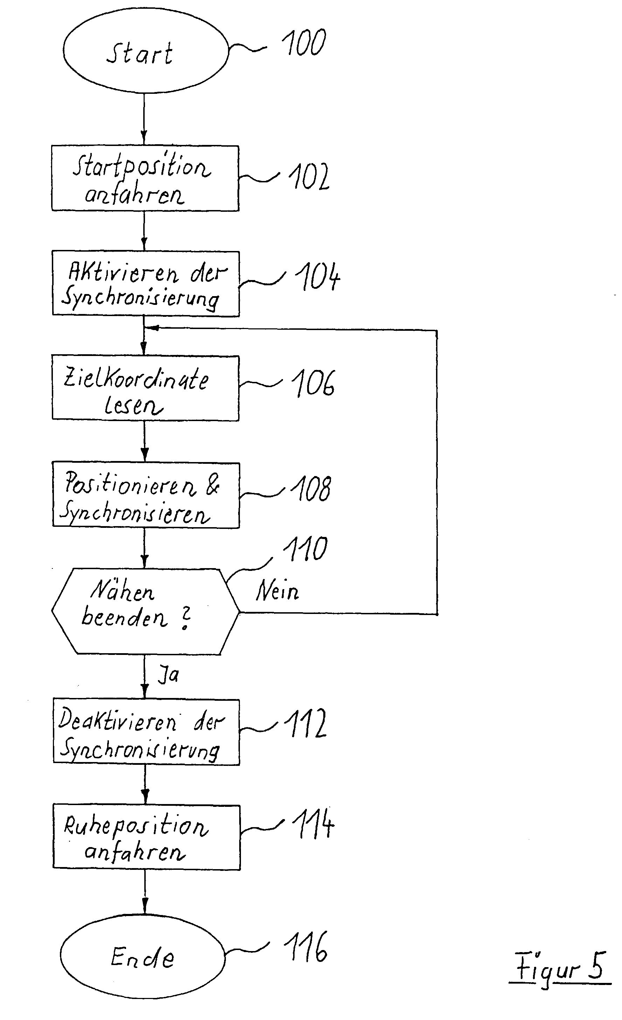

Zur Erläuterung der elektronischen Kopplung zwischen dem Nadelsystem mit dem Nadelantrieb und dem Greifersystem mit dem Greiferantrieb wird auf Figur 4 verwiesen. Der Nadelantrieb 46 ist mit dem von ihm mechanisch unabhängigen Greiferantrieb 48 über eine erste elektronische Steuereinheit 50 gekoppelt, welche eine elektronische Synchronachse für die beiden Antriebe 46 und 48 bildet. Durch die zweite Steuereinheit 50 werden das Greifersystem 42 und das Nadelsystem 44 mittels eines 3D-Meßsystems (nicht dargestellt) synchronisiert, das Synchronisationsabweichungen erfaßt, so daß das Greifersystem 42 und das Nadelsystem 44 während des Nähvorgangs einen gleichbleibenden Abstand voneinander haben. Die erste Steuereinheit 50 stellt somit einen einfachen Regelkreis dar.

Die Positionierantriebe der beiden Roboter 16, 18 werden jeweils über eine interpolierbare Mehrachsen-CNC-Positioniereinheit 52 bzw. 54 gesteuert, die ihrerseits über eine zweite Steuervorrichtung 56 elektronisch miteinander gekoppelt sind. Die interpolierbare Mehrachsen-CNC-Positioniereinheit 52, 54 ist als Bestandteil in der oben genannten KSL-Compact KL 120 Steuerung enthalten, die hier z.B. verwendet werden kann. Jeder Positioniereinheit 52, 54 ist dabei eine Rechnereinheit 58 bzw. 60 zugeordnet, die in einem Master-Slave-Verhältnis zueinander stehen. Welches der Systeme dabei das führende (Master-) System und welches das nachgeführte (Slave-) System ist, spielt keine Rolle.

Die zweite Steuereinheit 56 ist dabei so ausgebildet, daß die beiden CNC-Positioniereinheiten zum Anfahren von Näharbeitspunkten im Raum sowie zum Ausfahren in den Ruhezustand asynchron arbeiten, da für diese Bewegungen für das Nadelsystem 44 einerseits und das Greifersystem 42 andererseits unterschiedliche räumliche Bedingungen vorliegen können. Während des Nähvorganges jedoch sind die beiden CNC-Positioniereinheiten 52, 54 für das Greifersystem 42 bzw. das Nadelsystem 44 elektronisch zum exakten mechanisch unabhängigen Parallellauf im Raum synchronisiert.

Die in Figur 4 dargestellte zweite Steuervorrichtung 56 enthält einen Speicher 62, der zur Speicherung der Positionskoordinaten von Greifersystem 42 und Nadelsystem 44 dient.

Diese Koordinaten können dabei den Rechnereinheiten 58, 60, die den Positioniereinheiten 52, 54 zugeordnet sind, entsprechend der jeweiligen Stellung der Positioniereinheiten 52, 54 entnommen werden. Damit ist es möglich, die Koordinaten eines vorgegebenen Nahtverlaufs in den Speicher 62 einzugeben, indem man Greifersystem 42 und Nadelsystem 44 gemeinsam an einer vorgegebenen Naht entlang führt.

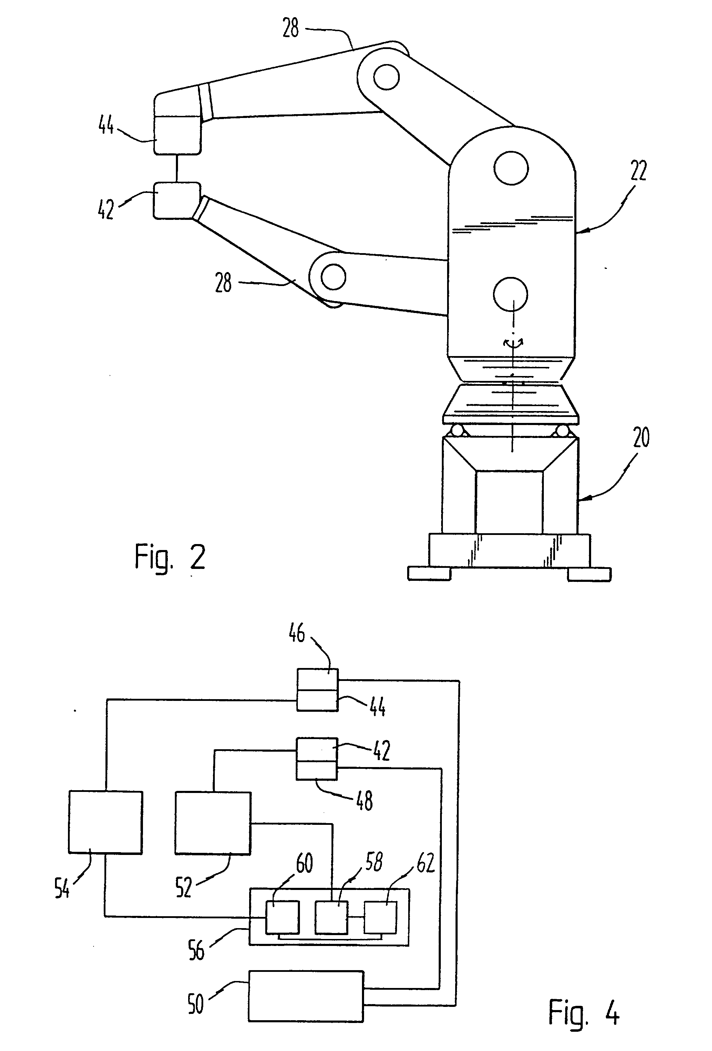

Die Ausführungsform gemäß Figur 2 unterscheidet sich von der Ausführungsform gemäß Figur 1 dadurch, daß die beiden Gelenkarme 28 an ein und derselben Basis 26 angelenkt sind. Damit entfällt die Möglichkeit, die beiden Gelenkarme 28 unabhängig voneinander auf einer Schiene 20 zu verfahren. In vielen Fällen wird jedoch dieser Freiheitsgrad nicht erforderlich sein. Im übrigen gilt jedoch für die Kopplung und Steuerung von Greifersystem und Nadelsystem an den beiden Gelenkarmen das gleiche wie für die an getrennten Robotern 16, 18 gemäß Figur 1 angeordneten Systeme.

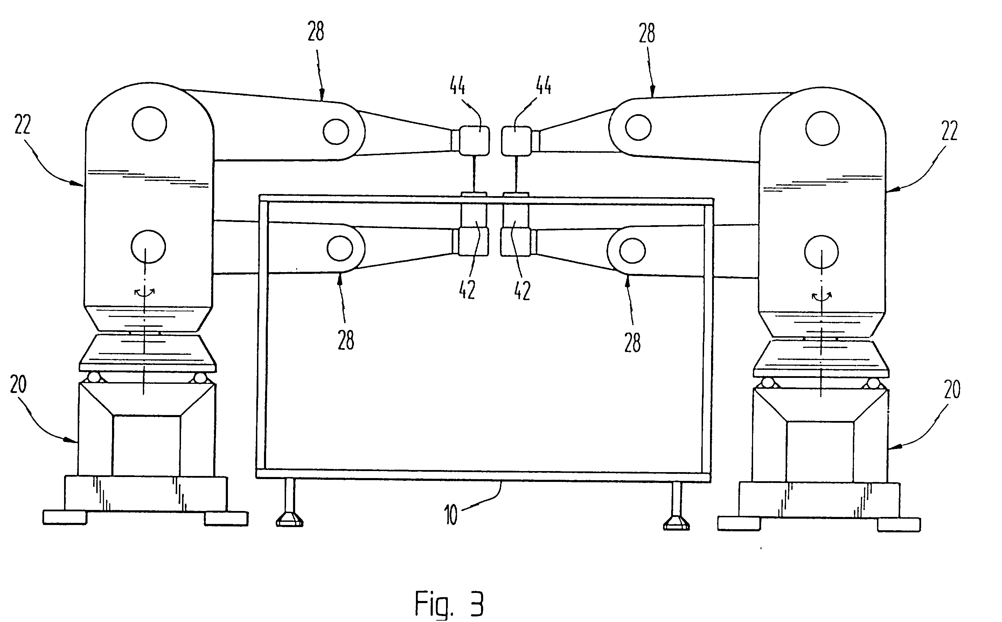

Figur 3 schließlich zeigt eine weitere Ausführungsvariante, bei der zwei Vorrichtungen gemäß Figur 2 beiderseits eines Gestelles 10 zur Aufnahme eines Werkstückes angeordnet sind, so daß gleichzeitig zwei Nähte an einem Werkstück hergestellt werden können. In Figur 3 sind die beiden Nähvorrichtungen in einer Extremlage dargestellt, in der ihre Nadelsysteme 44 und Greifersysteme 42 den kürzesten Abstand voneinander haben. Die beiden Nähvorrichtungen können also unabhängig voneinander arbeiten, ohne sich gegenseitig zu behindern. Wenn sie dagegen so angeordnet sind, daß sich ihre Wege theoretisch kreuzen können, müßte eine übergeordnete Steuerung vorgesehen sein, die eine Kollision zwischen den beiden Nähvorrichtungen verhindert.

Das Greifersystem kann für Steppstich-, Zweifadenkettstichoder Einfadenkettstich ausgeführt sein.

Figur 5 zeigt ein Flußdiagramm für das Verfahren zum dreidimensionalen Nähen. Zu Beginn des Verfahrens (Schritt 100) ist das Werkstück 12, das aus zwei zu vernähenden Teilen bestehen kann, auf dem Gestell 10 bereitgestellt. Weiterhin sind die Roboter 16 und 18 in Betriebsbereitschaft und die Koordinaten für den räumlichen Verlauf der Naht sind im Speicher 62 abgespeichert. Die Daten können z.B. mit Hilfe des Teach-In-Verfahrens erfaßt worden sein.

Anschließend bewegen die Roboter 16 bzw. 18 das Greifersystem 42 bzw. das Nadelsystem 44 in die Startposition. Dabei wird der Roboter 16 durch die Steuerung 58 und der Roboter 18 durch die Steuerung 60 geführt. Beide Roboter bewegen sich somit unabhängig voneinander zur Startposition für den Nähvorgang (Schritt 102).

Danach erfolgt das Aktivieren der Synchronisierung (Schritt 104) mit Hilfe des 3D-Sensors, dessen Sendeelement z.B. an dem Nadelsystem 44 angebracht sein kann und dessen Empfangselement in diesem Falle am Greifersystem 42 befestigt ist. Die erste elektronische Steuereinheit 50 wird aktiviert und hält über einen einfachen Regelkreis einen konstanten Abstand zwischen dem Greifersystem 42 und dem Nadelsystem 44, indem es die Meßwerte des 3D-Sensors ständig auswertet und entsprechend der Abweichung des Abstandes vom Sollwert die beiden Antriebe 46 und 48 ansteuert.

Das Verfahren kann nun mit dem Nähvorgang beginnen (Schritte 106 bis 110). Dazu wird die nächste Zielkoordinate, die das Greifersystem 42 und das Nadelsystem 44 synchron einnehmen sollen, aus dem Speicher 62 gelesen (Schritt 106). Mit Hilfe der Positioniereinheiten 52 bzw. 54 wird die Positionierung durchgeführt (Schritt 108). Parallel dazu sorgt die Synchronisierung durch die erste elektronische Steuereinheit 50 in Verbindung mit den beiden Antrieben 46 und 48 dafür, daß sich der Abstand zwischen Greifersystem 42 und Nadelsystem 44 nicht ändert.

In einem nächsten Verfahrensschritt wird festgestellt, ob der Nähvorgang schon beendet werden muß (Schritt 110). Ist dies nicht der Fall, so wird das Verfahren im Verfahrensschritt 106 fortgesetzt. Somit befindet sich das Verfahren in einer Schleife aus den Verfahrensschritten 106 bis 110. Innerhalb dieser Schleife werden am Werkstück 12 Nähte auf der zuvor bestimmten Raumbahn angebracht. Die Schleife aus den Verfahrensschritten 106 bis 110 wird solange durchlaufen, bis im Verfahrensschritt 110 durch die zweite Steuervorrichtung 56 festgestellt wird, daß keine weiteren Zielkoordinaten vorhanden sind (Schritt 110). In diesem Falle wird die Synchronisierung deaktiviert, indem die erste elektronische Steuereinheit 50 ausgeschaltet wird (Schritt 112).

Nach dem Deaktivieren der Synchronisierung im Verfahrensschritt 112 können die Roboter 16 und 18 nach einem Steuerprogramm, das sich in der zweiten Steuervorrichtung 56 befindet, in eine Ruheposition gefahren werden (Schritt 114).

Damit ist das Ende des Verfahrens erreicht (Schritt 116). Das nunmehr zusammengenähte Werkstück 12 kann vom Gestell 10 entnommen werden.

## Patentansprüche

1. Nähvorrichtung mit einem Nadelsystem (44) und einem mit diesem zusammenwirkenden Greifersystem (42), die gemeinsam relativ zum Nähgut (12) in Richtung mindestens zweier Raumachsen verstellbar sind, dadurch **gekennzeichnet,** daß das Nadelsystem (44) mit dem Nadelantrieb (46) an einem ersten Träger (18, 28) angeordnet und mittels einer ersten Positioniereinrichtung (54) im Raum positionierbar ist, daß das Greifersystem (42) mit dem Greiferantrieb (48) an einem zweiten Träger (16, 28) angeordnet und mittels einer zweiten Positioniereinrichtung (52) im Raum positionierbar ist, daß eine erste elektronische Steuereinrichtung (50) zum Synchronisieren des Nadelantriebes (46) und des Greiferantriebes (48) vorgesehen ist und daß eine zweite elektronische Steuervorrichtung (56) vorgesehen ist, welche die Positioniervorrichtungen (54, 52) in der Weise synchronisiert, daß das Nadelsystem (44) und das Greifersystem (42) während des Nähvorganges eine vorgegebene räumliche Beziehung relativ zueinander einhalten.

2. Nähvorrichtung nach Anspruch 1, dadurch **gekennzeichnet,** daß die beiden Positioniervorrichtungen (52, 54) als interpolierbare Mehrachsen-CNC-Positioniereinheiten mit Positionierantrieben für eine translatorische Bewegung des Nadel- und des Greifersystems (44, 42) in und eine Drehung des Nadel- und des Greifersystems (44, 42) um die drei Raumachsen ausgebildet sind.

3. Nähvorrichtung nach Anspruch 1 oder 2, dadurch **gekennzeichnet,** daß die zweite Steuervorrichtung (56) jeweils eine einer Positioniervorrichtung (52, 54) zugeordnete Recheneinheit (58, 60) umfaßt, wobei die Recheneinheiten (58, 60) in einem Master-Slave-Verhältnis stehen.

4. Nähvorrichtung nach einem der Ansprüche 1 bis 3, dadurch **gekennzeichnet,** daß die beiden Träger (28) mechanisch unabhängig voneinander sind.

5. Nähvorrichtung nach einem der Ansprüche 1 bis 3, dadurch **gekennzeichnet,** daß die beiden Träger (28) an einer gemeinsamen Basis (22) beweglich gelagert sind, die relativ zu einer Nähguthalterung (10) verfahrbar ist.

6. Nähvorrichtung nach einem der Ansprüche 1 bis 5, dadurch **gekennzeichnet,** daß die zweite Steuervorrichtung (56) Mittel zum Erfassen und Speichern einer von dem Nadelsystem (44) und dem Greifersystem (42) bei einem Nähvorgang gemeinsam durchlaufenen Nähkurve umfaßt, wobei die Nähkurve in einem Speicher (62) abgespeichert wird.

7. Nähverfahren zum Nähen entlang einer dreidimensionalen Kurve, mit einem Nadelsystem (44) und einem mit diesem zusammenwirkenden Greifersystem (42), die gemeinsam relativ zum Nähgut (12) in Richtung mindestens zweier Raumachsen verstellbar sind, wobei die folgenden Schritte ausgeführt werden:
Positionieren des Nadelsystems (44) und des Greifersystems (42) an einer Startposition auf der Kurve (Schritt 102),
elektrisches Koordinieren der Bewegungen des Nadelsystems (42) und des Greifersystems (44) entlang der Kurve, wobei das Nähen während der Bewegung entlang der Kurve erfolgt (Schritte 106, 108 und 110), und
elektronisches Synchronisieren des Nadelsystems (44) und des Greifersystems (42) während des Nähvorganges (Schritte 104, 108).

8. Nähverfahren nach Anspruch 7, **gekennzeichnet** durch jeweils einen Verfahrensschritt zum unabhängigen Ansteuern des Nadelsystems (44) und des Greifersystems (42) vor (Schritt 102) und nach (Schritt 114) dem Nähen, wobei eine unterschiedlicher räumliche Beziehung zwischen dem Nadelsystem (44) und dem Greifersystem (42) auftritt.

9. Nähverfahren nach Anspruch 7 oder 8, dadurch **gekennzeichnet,** daß das Positionieren mit interpolierbaren CNC-Positioniereinheiten erfolgt, wobei die CNC-Positioniereinheiten in einem Master-Slave-Verhältnis stehen.

10. Nähverfahren nach einem der Ansprüche 7 bis 9, **gekennzeichnet** durch jeweils einen Verfahrensschritt zum Bewegen des Nadelsystems (44) auf einem ersten Träger (18, 28) und zum Bewegen des Greifersystems (42) auf einem vom ersten Träger separaten zweiten Träger (16, 28).

11. Nähverfahren nach einem der Ansprüche 7 bis 9, **gekennzeichnet** durch einen Verfahrensschritt zum Bewegen des mittels Träger (28) an einer gemeinsamen Basis (22) beweglich gelagerten Nadelsystems (44) und Greifersystems (42), wobei die gemeinsame Basis (22) relativ zu einer Nähguthalterung (10) verfahrbar ist.

12. Nähverfahren nach einem der Ansprüche 7 bis 11, **gekennzeichnet** durch einen Verfahrensschritt zum Erfassen und Speichern der vom Nadelsystem (44) und vom Greifersystem (42) beim Nähen zu durchlaufenden Kurve, wobei die Kurve in einem Speicher (42) abgespeichert wird.

## Claims

1. A sewing device comprising a needle system (44) and a co-operating gripper system (42) movable together relative to the sewn material (12) in the direction of at least two space axes, characterised in that the needle system (44) and the needle drive (46) are disposed on a first holder (18, 28) and are positionable in space by a first positioning device (54), in that the gripper system (42) and the gripper drive (48) are disposed on a second holder (16, 28) and are positionable in space by a second positioning device (52), in that a first electronic control means (50) is provided for synchronising the needle drive (46) and the gripper drive (48) and in that a second electronic control device (56) is provided for synchronising the positioning devices (54, 52) so that during the sewing operation the needle system (44) and the gripper system (42) remain in a preset spatial relation to one another.

2. A sewing device according to claim 1, characterised in that the two positioning devices (52, 54) are in the form of interpolatable multi-axis CNC positioning units with positioning drives for moving the needle and gripper systems (44, 46) in translation along and rotating them around the three space axes.

3. A sewing device according to claim 1 or 2, characterised in that the second control device (56) has a computer unit (58, 60) associated with each respective positioning device (52, 54), the computer units (58, 60) being in a master-slave relation.

4. A sewing device according to any of claims 1 to 3, characterised in that the two holders (28) are mechanically independent of one another.

5. A sewing device according to any of claims 1 to 3, characterised in that the two holders (28) are mounted for movement on a common base (22) which can be moved relative to a means (10) for holding the sewn material.

6. A sewing device according to any of claims 1 to 5, characterised in that the second control device (56) comprises means for detecting and storing a curve along which the needle system (44) and the gripper system (42) travel together during a sewing operation, the sewing curve being stored in a memory (62).

7. A process of sewing along a three-dimensional curve, using a needle system (44) and a co-operating gripper system (42) which are adjustable together relative to the sewn material (12) along at least two space axes, the following steps being performed:
positioning the needle system (44) and the gripper system (42) at a start position on the curve (step 102),
electrically co-ordinating the movements of the needle system (42) and the gripper system (44) along the curve, sewing occurring during motion along the curve (steps 106, 108 and 110), and
electronic synchronisation of the needle system (44) and gripper system (42) during the sewing operation (steps 104, 108).

8. A sewing process according to claim 7, characterised by respective steps for independently actuating the needle system (44) and the gripper system (42) before (step 102) and after (step 114) sewing, a different spatial relation being established between the needle system (44) and the gripper system (42).

9. A sewing process according to claim 7 or 8, characterised in that positioning is effected by interpolatable CNC positioning units, the CNC positioning units being in a master-slave relation.

10. A sewing process according to any of claims 7 to 9, characterised by respective steps for moving the needle system (44) on a first holder (18, 28) and moving the gripper system (42) on a second holder (16, 28) separate from the first holder.

11. A sewing process according to any of claims 7 to 9, characterised by a step for moving the needle system (44) and the gripper system (42) mounted by means of a holder (28) for movement on a common base (22), the common base (22) being movable relative to means (10) for holding the sewn material.

12. A sewing process according to any of claims 7 to 8, characterised by a step for detecting and storing the curve to be travelled by the needle system (44) and the gripper system (42) during sewing, the curve being stored in a memory (42).

## Revendications

1. Dispositif de couture comprenant un système d'aiguille (44) et un système de preneur de boucle (42) coopérant avec celui-ci, qui peuvent être déplacés ensemble par rapport à la matière à coudre (12) selon au moins deux axes de l'espace, caractérisé en ce que le système d'aiguille (44), avec l'entraînement (46) de l'aiguille, est agencé sur un premier support (18, 28) et peut être positionné dans l'espace au moyen d'un premier dispositif de positionnement (54), en ce que le système de preneur de boucle, avec l'entraînement (48) du preneur de boucle, est agencé sur un deuxième support (16, 28) et peut être positionné dans l'espace au moyen d'un deuxième dispositif de positionnement (52), en ce qu'un premier dispositif de commande électronique (50) est prévu pour synchroniser l'entraînement (46) de l'aiguille et l'entraînement (48) du preneur de boucle, et en ce qu'il est prévu un deuxième dispositif de commande électronique (56) qui synchronise les dispositifs de positionnement (54, 52) de telle manière que le système d'aiguille (44) et le système de preneur de boucle (42) conservent pendant l'opération de couture une position relative prédéterminée l'un par rapport à l'autre dans l'espace.

2. Dispositif de couture selon la revendication 1, caractérisé en ce que les deux dispositifs de positionnement (52, 54) sont constitués par des unités de positionnement CNC multiaxes interpolables, munies d'entraînements de positionnement prévus pour un déplacement en translation du système d'aiguille et du système de preneur de boucle (44, 42), et pour une rotation du système d'aiguille et du système de preneur de boucle (44, 42) autour des trois axes de l'espace.

3. Dispositif de couture selon la revendication 1 ou 2, caractérisé en ce que le deuxième dispositif de commande (56) comprend une unité de calcul (58, 60) associée à chaque dispositif de positionnement (52, 54), les unités de calcul (58, 60) étant dans une relation maître-esclave entre elles.

4. Dispositif de couture selon une des revendications 1 à 3, caractérisé en ce que les deux supports (28) sont mécaniquement indépendants l'un de l'autre.

5. Dispositif de couture selon une des revendications 1 à 3, caractérisé en ce que les deux supports (28) sont montés mobiles sur une base commune (22) qui peut être déplacée par rapport à une monture de maintien de la matière à coudre (10).

6. Dispositif de couture selon une des revendications 1 à 5, caractérisé en ce que le deuxième dispositif de commande (56) comprend des moyens pour saisir et mémoriser une courbe de couture parcourue conjointement par le système d'aiguille (44) et le système de preneur de boucle (42) au cours d'une opération de couture, la courbe de couture étant mémorisée dans une mémoire (62).

7. Procédé de couture pour coudre le long d'une courbe tridimensionnelle, comprenant un système d'aiguille (44) et un système de preneur de boucle (42) coopérant avec celui-ci, qui peuvent être déplacés ensemble par rapport à la matière à coudre (12) selon au moins deux axes de l'espace, dans lequel les étapes suivantes sont exécutées:
positionnement du système d'aiguille (44) et du système de preneur de boucle (42) dans une position de départ sur la courbe (étape 102),
coordination électrique des mouvements du système d'aiguille (42) et du système de preneur de boucle (44) le long de la courbe, la couture s'effectuant pendant le mouvement le long de la courbe (étapes 106, 108 et 110), et
synchronisation électronique du système d'aiguille (44) et du système de preneur de boucle (42) pendant l'opération de couture (étapes 104, 108).

8. Procédé de couture selon la revendication 7, caractérisé par une étape de procédé pour le pilotage indépendant du système d'aiguille (44) et du système de preneur de boucle (42) avant la couture (étape 102) et après la couture (étape 114), dans laquelle il s'établit une relation spatiale différente entre le système d'aiguille (44) et le système de preneur de boucle (42).

9. Procédé de couture selon la revendication 7 ou 8, caractérisé en ce que le positionnement s'effectue au moyen d'unités de positionnement CNC interpolables, les unités de positionnement CNC étant dans une relation maître-esclave.

10. Procédé de couture selon une des revendications 7 à 9, caractérisé par une étape de procédé pour le déplacement du système d'aiguille (44) sur un premier support (18, 28), et pour le déplacement du système de preneur de boucle (42) sur un deuxième support (16, 28) séparé du premier support.

11. Procédé de couture selon une des revendications 7 à 9, caractérisé par une étape de procédé pour le déplacement du système d'aiguille (44) et du système de preneur de boucle (42) montés mobiles sur une base commune (22) au moyen de supports (28), la base commune (22) pouvant être déplacée par rapport à une monture de maintien de la matière à coudre (10).

12. Procédé de couture selon une des revendications 7 à 11, caractérisé par une étape de procédé pour saisir et mémoriser la courbe qui doit être parcourue par le système d'aiguille (44) et par le système de preneur de boucle (42) pendant la couture, ladite courbe étant mémorisée dans une mémoire (42).
